# EUROPÄISCHE PATENTSCHRIFT

(11) **EP 1 992 127 B1**
(45) Veröffentlichungstag und Bekanntmachung des Hinweises auf die Patenterteilung: **13.09.2017**
(21) Anmeldenummer: 07712385.9
(22) Anmeldetag: 28.02.2007
(51) Int. Cl.: H04L 29/06, H04W 80/04

(54) **KOMMUNIKATIONSSYSTEM, RECHNER UND VERFAHREN ZUM ERMITTELN EINES ZU VERWENDENDEN KOMMUNIKATIONSPROTOKOLLS IN EINEM KOMMUNIKATIONSSYSTEM**
COMMUNICATION SYSTEM, COMPUTER, AND METHOD FOR DETERMINING A COMMUNICATION PROTOCOL TO BE USED IN A COMMUNICATION SYSTEM
SYSTÈME DE COMMUNICATION, ORDINATEUR ET PROCÉDÉ DE DÉTERMINATION D'UN PROTOCOLE DE COMMUNICATION À EMPLOYER DANS UN SYSTÈME DE COMMUNICATION

(30) Priorität: 03.03.2006 DE 102006009988
(43) Veröffentlichungstag der Anmeldung: 19.11.2008
(73) Patentinhaber: Siemens Aktiengesellschaft, 80333 München (DE)
(72) Erfinder: KULKARNI, Vivek, 82008 Unterhaching (DE)
(86) Internationale Anmeldenummer: PCT/EP2007/051897
(87) Internationale Veröffentlichungsnummer: WO 2007/099118

(56) Entgegenhaltungen:
- WO-A-02/11373
- WO-A-03/084185

## Beschreibung

Die Erfindung betrifft ein Kommunikationssystem, einen Rechner und ein Verfahren zum Ermitteln eines zu verwendenden Kommunikationsprotokolls in dem Kommunikationssystem. Die Erfindung betrifft ferner ein Computerprogrammprodukt, das direkt in den internen Speicher eines digitalen Computers geladen werden kann sowie ein Computerprogrammprodukt, das auf einem computergeeigneten Medium gespeichert ist.

IPv6, das Internet Protocol Version 6, ist der Nachfolger des gegenwärtig im Internet noch überwiegend verwendeten Internet Protocol in der Version 4 (IPv4). Beide Protokolle sind Standards für die Netzwerkschicht des OSI-Referenzmodells und regeln die Adressierung und das Routing von Datenpaketen durch ein Kommunikationsnetzwerk. IPv4 benutzt 32-Bit-Adressen, so dass ein Adressraum von etwas über vier Milliarden IP-Adressen verfügbar ist, mit denen Computer und andere Geräte angesprochen werden können. In den Anfangstagen des Internet, als es nur wenige vernetzte Rechner gab, die eine IP-Adresse brauchten, galt dies als mehr als ausreichend. Viele der theoretisch vier Milliarden IP-Adressen sind jedoch in der Praxis nicht nutzbar, da sie Sonderaufgaben dienen oder zu großen Teilnetzen (sog. Subnetze) gehören. Als Resultat herrscht in machen Teilen der Welt, insbesondere im IT-Wachstumsmarkt Asiens, derzeit eine Adressenknappheit, der man mit verschiedenen Notbehelfen begegnen muss. Aufgrund des Wachstums und der Wichtigkeit des Internet konnte dies kein Dauerzustand bleiben, so dass zur Schaffung von Abhilfe IPv6 entwickelt wurde. IPv6 bietet einen Adressraum von 3,4·10³⁸ Adressen.

Mobile IP wurde als Erweiterung des IPv6-Standards unter dem Namen Mobile IPv6 (RFC3775) in das IPv6-Protokoll integriert. Mobile IP stellt einen effizienten Mechanismus für die Mobilität von Rechnern in einem Kommunikationssystem, wie z.B. dem Internet, bereit. Mit Mobile IP ist es möglich, dass mobile Rechner ihren Zugangspunkt zum Internet ändern und trotzdem ihre (statische) IP-Adresse beibehalten. Um die Beibehaltung der festen IP-Adresse zu gewährleisten, wird jedes Endgerät von Mobile IP mit zwei Adressen ausgestattet: die primäre Adresse ist die sog. "Home Address", die sekundäre Adresse wird als "Care-Of-Address" (COA) bezeichnet. Wenn der mobile Rechner sein sog. Heimatnetz verlässt und sich in einem fremden Netz anmeldet, bekommt er von diesem eine Care-Of-Address zugewiesen, die er dem "Home Agent", einem speziellen Rechner in seinem Heimatnetzwerk, mitteilt. Beim Datenverkehr leitet dieser Home Agent nun ankommende Datenpakete an die Care-Of-Address und damit an den mobilen Rechner weiter. Will dagegen der mobile Rechner Datenpakete verschicken, so kann er diese im Regelfall ohne den Umweg über den Home Agent verschicken, da die normalen IP-Routing-Mechanismen dafür sorgen, dass das Datenpaket das Ziel erreicht. Kehrt der mobile Rechner in sein Heimatnetz zurück, meldet er sich bei seinem Home Agent wieder ab, so dass an ihn gerichtete Datenpakete wieder ohne Umweg über den Home Agent sichergestellt werden.

Es kann nun die Situation auftreten, dass das Fremdnetz, mit dem sich der mobile Rechner verbindet, sowohl gemäß dem Protokoll IPv4 als auch dem Protokoll IPv6 kommunizieren kann. Um eine Kommunikation zu einem Zielrechner aufbauen zu können, ist der mobile Rechner deshalb gezwungen, Datenpakete sowohl gemäß dem Protokoll IPv4 als auch dem Protokoll IPv6 mit identischem Nutzinhalt zu senden. Diese Vorgehensweise verursacht bei dem mobilen Rechner eine hohe Arbeitslast und verursacht zudem einen unnötigen Datenverkehr in dem Kommunikationssystem.

Die WO 03/084185 A offenbart ein Kommunikationssystem mit mehreren miteinander gekoppelten Teilnetzwerken, welche jeweils zur Kommunikation gemäß dem Protokoll IPv4 und/oder dem Protokoll IPv6 ausgebildet sind. Bei der Verbindung eines Rechners, der sowohl zur Kommunikation gemäß IPv4 und IPv6 ausgebildet ist, wird vor dem Aufbau einer Kommunikation zu einem Zielrechner ermittelt, welches Protokoll für eine Kommunikation mit einem Netzwerkverbindungsrechner, an den der mobile Rechner angeschlossen ist, verwendet werden soll.

Es ist deshalb Aufgabe der vorliegenden Erfindung ein Kommunikationssystem und ein Verfahren zum Ermitteln eines zu verwendenden Kommunikationsprotokolls in einem Kommunikationssystem anzugeben, welches in dem Kommunikationssystem eine möglichst effiziente Kommunikation des mobilen Rechners mit einem Zielrechner ermöglicht.

Diese Aufgaben werden durch ein Kommunikationssystem gemäß den Merkmalen des Patentanspruches 1, durch ein Verfahren gemäß den Merkmalen des Patentanspruches 10 sowie durch einen Rechner mit den Merkmalen des Anspruches 16 gelöst. Die Aufgaben werden ferner durch Computerprogrammprodukte gemäß den Merkmalen der Patentansprüche 18 und 19 gelöst. Vorteilhafte Ausgestaltungen ergeben sich jeweils aus den abhängigen Patentansprüchen.

Ein erfindungsgemäßes Kommunikationssystem weist folgende Merkmale auf: zumindest ein erstes Kommunikationsnetzwerk, das zur Kommunikation gemäß einem ersten Protokoll ausgebildet ist. Zumindest ein zweites Kommunikationsnetzwerk, das zur Kommunikation gemäß einem zweiten Protokoll ausgebildet ist. Zumindest ein drittes Kommunikationsnetzwerk, das zur Kommunikation gemäß dem ersten und dem zweiten Protokoll ausgebildet ist. Das zumindest eine erste Kommunikationsnetzwerk und/oder das zumindest eine zweite Kommunikationsnetzwerk und/oder das zumindest eine dritte Kommunikationsnetzwerk sind zum Austausch von Nachrichten miteinander gekoppelt. Ein mobiler Rechner ist zur Kommunikation gemäß dem ersten und dem zweiten Protokoll ausgebildet. Ein Zielrechner ist zur Kommunikation gemäß dem ersten und/oder dem zweiten Protokoll ausgebildet und ist ein Rechner des ersten oder des zweiten oder des dritten Kommunikationsnetzwerks. Das Kommunikationssystem ist derart ausgebildet, dass beim Anschluss des mobilen Rechners an einen Netzwerkverbindungsrechner des dritten Kommunikationsnetzwerks vor dem Aufbau einer Kommunikationsverbindung zu dem Zielrechner ermittelt wird, welches Protokoll für eine Kommunikation mit dem Netzwerkverbindungsrechner verwendet werden soll.

Die Entscheidung über das zu verwendende Protokoll wird anhand statistischer Daten über die Netzwerktopologie von dem mobilen Rechner zu dem Zielrechner getroffen. Zur Ermittlung der statistischen Daten wird von einem zu sendenden Rechner eine Anfragenachricht an den Zielrechner unter Verwendung eines Hop-by-Hop-Nachrichtenübertragungsmechanismus übertragen, wobei von dem Zielrechner zumindest eine Antwortnachricht an den sendenden Rechner mit den statistischen Informationen übertragen und durch den sendenden Rechner ausgewertet wird, wobei der sendende Rechner der mobile Rechner oder der Netzwerkverbindungsrechner ist. Bevorzugt sind die statistischen Informationen in einem Header der Antwortnachricht enthalten.

Mit der Erfindung wird erreicht, dass eine optimale Übertragungsstrecke zwischen dem mobilen Computer (in dem Fremdnetz) und dem Zielrechner gewählt werden kann. Hierdurch kann eine optimale Performance der durch den mobilen Rechner ausgeführten Applikation erreicht werden, da der mobile Rechner kein Wissen über die Netzwerktopologie des Fremdnetzes über die gesamte Übertragungsstrecke (Kommunikationspfad) benötigt.

Gemäß einer ersten Ausführungsform des erfindungsgemäßen Kommunikationssystems ist dieses derart ausgebildet, dass das zur Kommunikation zwischen dem mobilen Rechner und dem Netzwerkverbindungsrechner zu verwendende Protokoll durch den mobilen Rechner bestimmt wird. Gemäß einer anderen Ausführungsform ist das Kommunikationssystem dazu ausgebildet, dass das zur Kommunikation zwischen dem mobilen Rechner und dem Netzwerkverbindungsrechner zu verwendende Protokoll durch den Netzwerkverbindungsrechner bestimmt wird. Letzte Alternative hat den Vorteil, dass das Wissen über Übertragungsstrecken durch den Netzwerkverbindungsrechner bereits vorgehalten werden kann, so dass unmittelbar nach dem Anschluss des mobilen Rechners an dem Netzwerkverbindungsrechner eine Kommunikation zu dem Zielrechner aufgebaut werden kann. Der mobile Rechner ist dabei von der Aufgabe befreit, zu ermitteln, gemäß welchem Protokoll eine Kommunikation erfolgen soll.

Als statistische Daten sind eine oder mehrere der folgenden Informationen heranziehbar:
- die Anzahl der Protokollumsetzungen, welche zwischen dem mobilen Rechner und dem Zielrechner notwendig sind. Die Protokollumsetzung ist dem Fachmann auch unter dem Begriff einer IP Version Translation geläufig;
- die Anzahl der Teilstrecken, d.h. die Anzahl der Hops, welche ein Datenpaket zwischen dem mobilen Rechner und dem Zielrechner zu überwinden hat:
- weitere Kriterien sind die sog. Roundtrip Time, die Verzögerung (insbesondere Delay), sowie die Schwankungsbreite, insbesondere Jitter, bei der Übertragung von Datenpaketen.

Es ist weiterhin zweckmäßig, wenn das Kommunikationssystem derart ausgebildet ist, dass eine für jedes Protokoll spezifische Antwortnachricht an den Zielrechner gesendet wird, um sämtliche mögliche Übertragungsstrecken hinsichtlich der Netzwerktopologie erfassen zu können. Insbesondere dadurch ist gewährleistet, dass eine optimale Übertragungsstrecke zwischen dem mobilen Rechner und dem Zielrechner ermittelbar ist.

Obwohl die Erfindung auf prinzipiell beliebige Protokolle zur Datenübertragung anwendbar ist, ist gemäß weiterer Ausführungsformen vorgesehen, dass das erste Protokoll das Internet Protocol Version 4 (IPv4) und das zweite Protokoll das Internet Protocol Version 6 (IPv6) ist.

Gemäß einer weiteren Ausführungsform ist das Kommunikationssystem derart ausgebildet, dass der mobile Rechner seinem Heimagenten eine ihm temporär zugewiesene Adresse (Care-Of-Address) nach dem Bestimmen des zu verwendenden Protokolls mitteilt. Damit ist eine Kommunikation des mobilen Rechners in dem dritten Kommunikationsnetzwerk, das für den mobilen Rechner das Fremdnetzwerk darstellt, möglich.

Mit dem erfindungsgemäßen Verfahren sind die gleichen Vorteile verbunden, wie sie vorstehend in Verbindung mit dem erfindungsgemäßen Kommunikationssystem erläutert wurden.

Das erfindungsgemäße Verfahren zum Ermitteln eines zu verwendenden Kommunikationsprotokolls in einem Kommunikationssystem der oben beschriebenen Art zeichnet sich dadurch aus, dass beim Anschluss des mobilen Rechners an einen Netzwerkverbindungsrechner des dritten Kommunikationsnetzwerks vor dem Aufbau einer Kommunikationsverbindung zu dem Zielrechner ermittelt wird, gemäß welchem Protokoll eine Kommunikation mit dem Netzwerkverbindungsrechner erfolgen soll. Die Entscheidung über das zu verwendende Protokoll wird anhand statistischer Daten über die Netzwerktopologie von dem mobilen Rechner zu dem Zielrechner getroffen. Zur Ermittlung der statistischen Daten wird von einem sendenden Rechner eine Anfragenachricht an den Zielrechner unter Verwendung eines Hop-by-Hop-Nachrichtenübertragungsmechanismus übertragen, wobei von dem Zielrechner eine Antwortnachricht an den sendenden Rechner mit den statistischen Informationen übertragen und durch den sendenden Rechner ausgewertet wird, wobei der sendende Rechner der mobile Rechner oder der Netzwerkverbindungsrechner ist. Zweckmäßigerweise wird von dem sendenden Rechner eine für jedes Protokoll spezifische Anfragenachricht an den Zielrechner gesendet.

Gemäß einer Ausführungsform wird das zur Kommunikation zwischen dem mobilen Rechner und dem Netzwerkverbindungsrechner zu verwendende Protokoll durch den mobilen Rechner bestimmt. In einer alternativen Variante wird das zur Kommunikation zwischen dem mobilen Rechner und dem Netzwerkverbindungsrechner zu verwendende Protokoll durch den Netzwerkverbindungsrechner bestimmt.

Als statistische Daten werden eine oder mehrere der folgenden Informationen herangezogen: Anzahl von Protokollumsetzungen (IP Version Translation), Anzahl der Teilstrecken (Hops), Roundtrip Time, Verzögerung, insbesondere Delay, sowie Schwankungsbreite, insbesondere Jitter, bei der Übertragung von Datenpaketen.

Es kann weiterhin vorgesehen sein, dass die statistischen Informationen von jedem in der Übertragungsstrecke der Antwortnachricht befindlichen Rechner in einem Header der Antwortnachricht eingefügt werden.

Ein weiterer Aspekt der Erfindung betrifft ein Computerprogrammprodukt, das direkt in den internen Speicher eines digitalen Computers geladen werden kann und Softwarecodeabschnitte umfasst, mit denen die Schritte des oben beschriebenen Verfahrens ausgeführt werden, wenn das Produkt auf einem Computer läuft.

Ein erfindungsgemäßer Rechner ist an ein Kommunikationssystem anschließbar, welches die folgenden Merkmale aufweist: zumindest ein erstes Kommunikationsnetzwerk, das zur Kommunikation gemäß einem ersten Protokoll ausgebildet ist. Zumindest ein zweites Kommunikationsnetzwerk, das zur Kommunikation gemäß einem zweiten Protokoll ausgebildet ist. Zumindest ein drittes Kommunikationsnetzwerk, das zur Kommunikation gemäß dem ersten und dem zweiten Protokoll ausgebildet ist. Das zumindest eine erste Kommunikationsnetzwerk und/oder das zumindest eine zweite Kommunikationsnetzwerk und/oder das zumindest eine dritte Kommunikationsnetzwerk sind zum Austausch von Nachrichten miteinander gekoppelt. Ein Zielrechner ist zur Kommunikation gemäß dem ersten und/oder dem zweiten Protokoll ausgebildet und ist ein Rechner des ersten oder des zweiten oder des dritten Kommunikationsnetzwerks. Der erfindungsgemäße Rechner ist zur Kommunikation gemäß dem ersten und dem zweiten Protokoll ausgebildet. Er ist ferner dazu ausgebildet, beim Anschluss an einen Netzwerkverbindungsrechner des dritten Kommunikationsnetzwerks vor dem Aufbau einer Kommunikationsverbindung zu dem Zielrechner zu ermitteln, gemäß welchem Protokoll eine Kommunikation mit dem Netzwerkverbindungsrechner erfolgen soll. Die Entscheidung über das zu verwendende Protokoll wird anhand statistischer Daten über die Netzwerktopologie von dem mobilen Rechner zu dem Zielrechner getroffen. Zur Ermittlung der statistischen Daten wird von einem sendenden Rechner eine Anfragenachricht an den Zielrechner unter Verwendung eines Hop-by-Hop-Nachrichtenübertragungsmechanismus übertragen, wobei von dem Zielrechner eine Antwortnachricht an den sendenden Rechner mit den statistischen Informationen übertragen und durch den sendenden Rechner ausgewertet wird, wobei der sendende Rechner der mobile Rechner oder der Netzwerkverbindungsrechner ist. Zweckmäßigerweise wird von dem sendenden Rechner eine für jedes Protokoll spezifische Anfragenachricht an den Zielrechner gesendet.

In weiteren Ausbildungen ist der erfindungsgemäße Rechner zur Durchführung des oben beschriebenen Verfahrens ausgebildet. Dabei ergeben sich die gleichen Vorteile, wie sie bereits vorstehend beschrieben wurden.

Ein weiterer Aspekt betrifft ein weiteres Computerprogrammprodukt, das auf einem computergeeigneten Medium gespeichert ist und Folgendes umfasst:
- computerlesbare Programmmittel, die einen Rechner beim Anschluss an ein Kommunikationsnetzwerk, das zur Kommunikation gemäß einem ersten und einem zweiten Protokoll ausgebildet ist, zur Durchführung einer parallelen oder sequentiellen Kommunikation in dem ersten und dem zweiten Protokoll zu einem Zielrechner veranlassen;
- computerlesbare Programmmittel, die den Computer zur Entgegennahme von jeweiligen Antwortnachrichten des Zielrechners auf die in dem ersten und dem zweiten Protokoll übertragenen Anfragenachrichten veranlassen;
- computerlesbare Programmmittel, die den Computer zum Auswerten der gemäß dem ersten und dem zweiten Protokoll empfangenen Nachrichten hinsichtlich der jeweiligen Übertragungsstrecke der Nachrichten veranlassen;
- computerlesbare Programmmittel, die den Computer zum Aufbau einer Kommunikationsstrecke gemäß dem ersten oder dem zweiten Protokoll zu dem Zielrechner für die weitere Kommunikation veranlassen.

Weitere Vorteile und Merkmale der Erfindung werden nachfolgend anhand einer Figur näher erläutert. In einer schematischen Darstellung ist ein erfindungsgemäßes Kommunikationssystem 100 gezeigt.

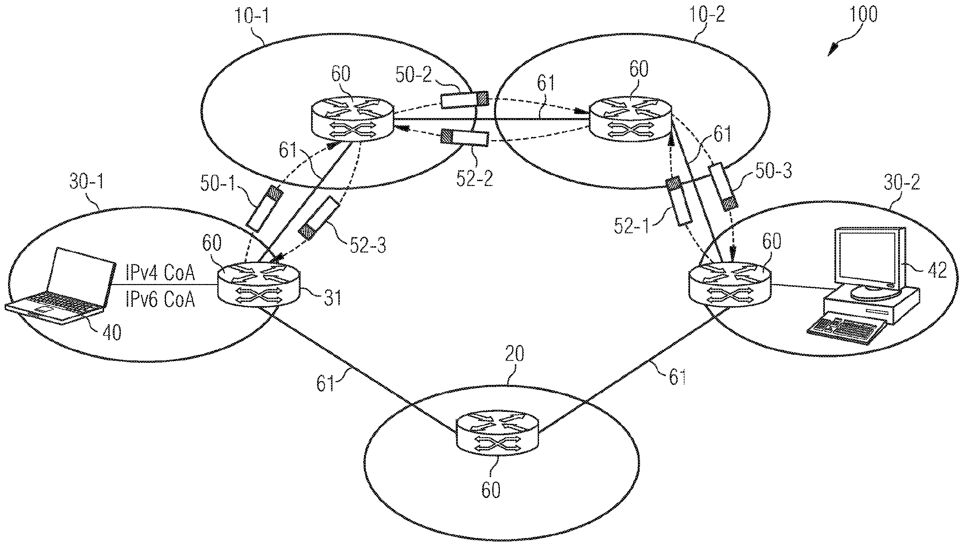

Das Kommunikationssystem 100 umfasst Kommunikationsnetze 10-1, 10-2, wobei die darin befindlichen, in der Figur nicht dargestellten Rechner, zur Kommunikation gemäß einem ersten Protokoll, z.B. IPv4, ausgebildet oder eingerichtet sind. Ein Kommunikationsnetz 20 umfasst ebenfalls nicht dargestellte, miteinander vernetzte Rechner, die zur Kommunikation gemäß einem zweiten Protokoll, z.B. IPv6, ausgebildet sind. Kommunikationsnetze 30-1, 30-2 mit darin vernetzten Rechnern (nicht dargestellt) sind in der Lage, sowohl gemäß dem ersten als auch dem zweiten Protokoll, somit IPv4 bzw. IPv6, zu kommunizieren.

Jedes der Kommunikationsnetze 10-1, 10-2, 20, 30-1, 30-2 weist eine Vielzahl von Netzwerkverbindungsrechnern auf, wobei jeweils exemplarisch nur ein Netzwerkverbindungsrechner 60 dargestellt ist. Die Kommunikationsnetze 10-1, 10-2, 20, 30-1, 30-2 sind exemplarisch über Leitungen 61 in der in der Figur gezeigten Weise vernetzt, wobei eine Leitung zwei Netzwerkverbindungsrechner 60 unterschiedlicher Kommunikationsnetze verbindet. Über die Leitungen 61 sind die Netzwerkverbindungsrechner 60 und die daran angeschlossenen Rechner jeweiliger Kommunikationsnetze in der Lage, Daten untereinander auszutauschen.

Ein mobiler Rechner 40, der zur Kommunikation gemäß dem ersten und dem zweiten Protokoll, d.h. sowohl gemäß IPv4 als auch IPv6 ausgebildet ist, ist mit einem Netzwerkverbindungsrechner 31 des Kommunikationsnetzes 30-1 gekoppelt. Das Kommunikationsnetz 30-1 stellt für den mobilen Rechner 40 ein Fremdnetz dar. Beim Anschließen des mobilen Rechners 40 an den Netzwerkverbindungsrechner 31 des Kommunikationsnetzes 30-1 ist zunächst die Entscheidung zu treffen, ob der mobile Rechner 40 gemäß IPv4 oder IPv6 kommunizieren soll. Um die bestmögliche Übertragungsstrecke zu einem Zielrechner 42 ausfindig zu machen, welcher lediglich beispielhaft an dem Netzwerkverbindungsrechner 60 des Kommunikationsnetzes 30-2 gekoppelt ist, sendet der mobile Rechner 40 zeitversetzt oder parallel eine Anfragenachricht gemäß IPv4 sowie gemäß IPv6 an den Zielrechner 42.

Die Anfragenachricht gemäß IPv4, die in der Figur schematisch durch ein Datenpaket 50-1, 50-2 und 50-3 dargestellt ist, wird unter Verwendung bekannter Übertragungsmechanismen über das Kommunikationsnetzwerk 10-1 und das Kommunikationsnetzwerk 10-2 an das Kommunikationsnetzwerk 30-2 und den Zielrechner 42 übertragen. Beim Passieren jedes Netzwerkverbindungsrechners 60 in einem der genannten Kommunikationsnetzwerke werden verschiedene Netzwerktopologieparameter, wie z.B. die Anzahl von Protokollumsetzungen, die Anzahl der Teilstrecken (auch als Hops bezeichnet) und ggf. Informationen wie Roundtrip Time, Verzögerung (Delay) und Schwankungsbreite (Jitter) registriert.

Nach Erhalt der Anfragenachricht sendet der Zielrechner 42 eine Antwortnachricht an den mobilen Rechner 40. Die Antwortnachricht ist in der Figur schematisch durch die Datenpakete 52-1, 52-2 und 52-3 dargestellt. In der Antwortnachricht, d.h. beim Passieren jedes der Netzwerkverbindungsrechner 60 der Kommunikationsnetzwerke 30-2, 10-2, 10-1 und 30-1 werden die oben genannten, die Netztopologie beschreibenden Informationen, dem Datenpaket hinzugefügt, so dass das bzw. die dem mobilen Rechner 40 zugeführten Informationen den mobilen Rechner 40 in die Lage versetzen, die Übertragungsstrecke zu dem Zielrechner 42 zu bewerten.

Die oben beschriebene Vorgehensweise kann auch dahingehend abgewandelt sein, dass die Netzwerktopologieparameter erst beim Passieren der Antwortnachricht des Zielrechners durch die jeweiligen Netzwerkverbindungsrechner ermittelt und dem, an den mobilen Rechner gerichteten, Datenpaket oder -paketen hinzugefügt werden.

Es versteht sich weiterhin von selbst, dass im Rahmen der Erfindung auch eine Mehrzahl an Datenpaketen zwischen dem mobilen Rechner 40 und dem Zielrechner ausgetauscht werden kann, um die bestmögliche Übertragungsstrecke zu bestimmen.

In der entsprechend beschriebenen Weise wird eine Anfragenachricht gemäß dem Protokoll IPv6 von dem mobilen Rechner 40 über das Kommunikationsnetzwerk 30-1, das Kommunikationsnetzwerk 20, an das Kommunikationsnetzwerk 30-2 und schließlich den Zielrechner 42 übermittelt. Der Zielrechner 42 übermittelt eine entsprechende Antwortnachricht mit einem oder mehreren Datenpaketen über die eben genommene Übertragungsstrecke an den mobilen Rechner 40.

Der mobile Rechner 40 ist anhand der ihm nun vorliegenden Informationen über die Übertragungsstecken von Daten gemäß IPv4 und IPv6 in der Lage zu entscheiden, ob eine Kommunikation gemäß Protokoll IPv4 oder IPv6 vorgenommen werden soll.

Die Ermittlung der die Netzwerktopologie betreffenden statistischen Daten erfolgt bevorzugt unter Verwendung eines Hop-by-Hop-Übertragungsmechanismus. Hierzu kann beispielsweise das RSVP (Resource Reservation Protocol) verwendet werden. Das RSVP ist eines der wichtigsten Signalisierungsprotokolle im Internetprotokoll-Stack. Es erlaubt Empfängern, deren Dienstanforderungen festzulegen. Damit können für bestimmte Anwendungen bestimmte Bandbreiten für einzelne Verbindungen reserviert werden. RSVP kann auch für die Reservierung der Dienstgüte (Quality of Service QoS) bei Unicast-Übertragungen benutzt werden. Eine solche Reservierung wird wie folgt aufgebaut:
1. Der Sender schickt eine spezielle Nachricht zum Empfänger, die sog. RSVP Path Message. Damit wird ein möglicher Pfad vom Sender zum Empfänger ermittelt.
2. Die dabei passierten Router werden protokolliert und so dem Empfänger mitgeteilt. Entlang dieses Pfades schickt der Empfänger dann eine weitere Nachricht, die sog. RSVP Reservation Message. Diese enthält eine sog. Flussspezifikation, die die Anforderungen für die Reservierung beschreibt.
3. Die Router auf dem Weg reservieren die Ressourcen entsprechend dieser Flussspezifikation oder schicken eine Fehlermeldung zurück. Kommt die RSVP Reservation Message beim Sender an, kann dieser sich auf die Reservierungen verlassen und gemäß der Spezifikation senden.

Ein alternativer Hop-by-Hop-Übertragungsmechanismus, der im Rahmen der vorliegenden Verwendung zum Einsatz kommen kann, ist Traceroute. Traceroute ist ein Diagnose-Werkzeug, mit dem ermittelt werden kann, über welche IP-Router Datenpakete bis zum Zielrechner vermittelt werden. Traceroute sendet dazu mehrfach Pakete an den Zielrechner. Empfängt ein Router ein Paket und müsste es vermitteln, verwirft er es und sendet eine ICMP-Antwort an den Absender mit seiner Adresse zurück. Die Summe der so gesammelten Adressen kennzeichnet den Weg zum Ziel durch das Netz. Der Rückweg ist in der Regel identisch.

Die Übermittlung der die Netztopologie kennzeichnenden Informationen könnte beispielsweise durch Abwandlung des Headers des jeweils verwendeten Übertragungsverfahrens, wie das oben beschriebene RSVP-Protokoll oder Traceroute, realisiert werden.

Die Entscheidung, gemäß welchem Protokoll der mobile Rechner eine Kommunikation zu dem Netzwerkverbindungsrechner 60 aufbauen möchte, kann beispielsweise anhand Kriterien wie der Anzahl der Hops, der Anzahl der vorzunehmenden IP-Protokollumsetzungen usw. erfolgen. Daneben können weitere, andere Kriterien zur Entscheidung herangezogen werden. Nachdem das entsprechende IP-Protokoll ausgewählt wurde, teilt der mobile Rechner seinem Heimagenten, welcher im vorliegenden Ausführungsbeispiel in einem beliebigen der Kommunikationsnetzwerke angeordnet sein kann, seine Care-Of-Address mit.

Entgegen der vorhergehenden Beschreibung kann die Funktionalität des Ermittelns der Netzwerkstatistik auch in dem Netzwerkverbindungsrechner 31 implementiert sein.

Die Vorteile der bestehenden Erfindung sind darin zu sehen, dass die bestmögliche Übertragungsstrecke durch eine Vielzahl von Kommunikationsnetzwerken, welche gemäß IPv4- und/oder IPv6-Protokollen kommunizieren, auffindbar ist. Weiterhin wird die Performance von Anwendungen in kombinierten IPv4-und IPv6-Kommunikationsnetzwerken erhöht. Die Erfindung minimiert Mobilitäts-Management-Ineffizienzen in einem kombinierten IPv4- und IPv6-Kommunikationsnetzwerk.

## Patentansprüche

1. Kommunikationssystem (100) mit
- zumindest einem ersten Kommunikationsnetzwerk (10-1, 10-2), das zur Kommunikation gemäß einem ersten Protokoll ausgebildet ist,
- zumindest einem zweiten Kommunikationsnetzwerk (20), das zur Kommunikation gemäß einem zweiten Protokoll ausgebildet ist,
- zumindest einem dritten Kommunikationsnetzwerk (30-1, 30-2), das zur Kommunikation gemäß dem ersten und dem zweiten Protokoll ausgebildet ist,
- wobei das zumindest eine erste Kommunikationsnetzwerk (10-1, 10-2) und/oder das zumindest eine zweite Kommunikationsnetzwerk (20) und/oder das zumindest eine dritte Kommunikationsnetzwerk 30-1, 30-2) zum Austausch von Nachrichten miteinander gekoppelt sind,
- einem mobilen Rechner (40), der zur Kommunikation gemäß dem ersten und dem zweiten Protokoll ausgebildet ist,
- einem Zielrechner (42), der zur Kommunikation gemäß dem ersten und/oder dem zweiten Protokoll ausgebildet ist und ein Rechner des ersten oder des zweiten oder des dritten Kommunikationsnetzwerks (10-1, 10-2, 30, 30-1, 30-2) ist,
- wobei das Kommunikationssystem derart ausgebildet ist, dass beim Anschluss des mobilen Rechners (40) an einen Netzwerkverbindungsrechner (31) des dritten Kommunikationsnetzwerks (30-1, 30-2) vor dem Aufbau einer Kommunikationsverbindung zu dem Zielrechner (42) ermittelt wird, welches Protokoll für eine Kommunikation mit dem Netzwerkverbindungsrechner (31) verwendet werden soll, **dadurch gekennzeichnet, dass**
die Entscheidung über das zu verwendende Protokoll anhand statistischer Daten über die Netzwerktopologie von dem mobilen Rechner (40) zu dem Zielrechner getroffen wird und zur Ermittlung der statistischen Daten von einem sendenden Rechner eine Anfragenachricht an den Zielrechner unter Verwendung eines Hop-by-Hop-Nachrichtenübertragungsmechanismus übertragen wird, wobei von dem Zielrechner zumindest eine Antwortnachricht an den sendenden Rechner mit den statistischen Informationen übertragen und durch den sendenden Rechner ausgewertet wird, wobei der sendende Rechner der mobile Rechner oder der Netzwerkverbindungsrechner ist.

2. Kommunikationssystem nach Anspruch 1,
**dadurch gekennzeichnet, dass**
dieses derart ausgebildet ist, dass das zur Kommunikation zwischen dem mobilen Rechner (40) und dem Netzwerkverbindungsrechner (31) zu verwendende Protokoll durch den mobilen Rechner (40) bestimmt wird.

3. Kommunikationssystem nach Anspruch 1 oder 2,
**dadurch gekennzeichnet, dass**
dieses derart ausgebildet ist, dass das zur Kommunikation zwischen dem mobilen Rechner (40) und dem Netzwerkverbindungsrechner (31) zu verwendende Protokoll durch den Netzwerkverbindungsrechner (31) bestimmt wird.

4. Kommunikationssystem nach der vorhergehenden Ansprüche, **dadurch gekennzeichnet, dass**
als statistische Daten eine oder mehrere der folgenden Informationen heranziehbar sind:
- Anzahl von Protokollumsetzungen, insbesondere IP Version Translation,
- Anzahl der Teilstrecken, insbesondere Hops,
- Roundtrip Time,
- Verzögerung, insbesondere Delay,
- Schwankungsbreite, insbesondere Jitter.

5. Kommunikationssystem nach der vorhergehenden Ansprüche, **dadurch gekennzeichnet, dass**
die statistischen Informationen in einem Header der Antwortnachricht enthalten sind.

6. Kommunikationssystem nach Anspruch 5,
**dadurch gekennzeichnet, dass**
dieses derart ausgebildet ist, dass eine für jedes Protokoll spezifische Anfragenachricht an den Zielrechner gesendet wird.

7. Kommunikationssystem nach einem der vorherigen Ansprüche, **dadurch gekennzeichnet, dass**
das erste Protokoll das Internet Protocol Version 4 (IPv4) ist.

8. Kommunikationssystem nach einem der vorherigen Ansprüche, **dadurch gekennzeichnet, dass**
das zweite Protokoll das Internet Protocol Version 6 (IPv6) ist.

9. Kommunikationssystem nach einem der vorherigen Ansprüche, **dadurch gekennzeichnet, dass**
dieses derart ausgebildet ist, dass nach dem Bestimmen des zu verwendenden Protokolls der mobile Rechner seinem Heimagenten eine ihm zugewiesene temporäre Adresse mitteilt.

10. Verfahren zum Ermitteln eines zu verwendenden Kommunikationsprotokolls in einem Kommunikationssystem mit
- zumindest einem ersten Kommunikationsnetzwerk (10-1, 10-2), das zur Kommunikation gemäß einem ersten Protokoll ausgebildet ist,
- zumindest einem zweiten Kommunikationsnetzwerk (20), das zur Kommunikation gemäß einem zweiten Protokoll ausgebildet ist,
- zumindest einem dritten Kommunikationsnetzwerk (30-1, 30-2), das zur Kommunikation gemäß dem ersten und dem zweiten Protokoll ausgebildet ist,
- wobei das zumindest eine erste Kommunikationsnetzwerk (10-1, 10-2) und/oder das zumindest eine zweite Kommunikationsnetzwerk (20) und/oder das zumindest eine dritte Kommunikationsnetzwerk 30-1, 30-2) zum Austausch von Nachrichten miteinander gekoppelt sind,
- einem mobilen Rechner (40), der zur Kommunikation gemäß dem ersten und dem zweiten Protokoll ausgebildet ist,
- einem Zielrechner (42), der zur Kommunikation gemäß dem ersten und/oder dem zweiten Protokoll ausgebildet ist und ein Rechner des ersten oder des zweiten oder des dritten Kommunikationsnetzwerks (10-1, 10-2, 30, 30-1, 30-2) ist,
wobei beim Anschluss des mobilen Rechners (40) an einen Netzwerkverbindungsrechner (31) des dritten Kommunikationsnetzwerks (30-1, 30-2) vor dem Aufbau einer Kommunikationsverbindung zu dem Zielrechner (42) ermittelt wird, gemäß welchem Protokoll eine Kommunikation mit dem Netzwerkverbindungsrechner (31) erfolgen soll,
**dadurch gekennzeichnet, dass**
die Entscheidung über das zu verwendende Protokoll anhand statistischer Daten über die Netzwerktopologie von dem mobilen Rechner (40) zu dem Zielrechner getroffen wird und zur Ermittlung der statistischen Daten von einem sendenden Rechner eine Anfragenachricht an den Zielrechner unter Verwendung eines Hop-by-Hop-Nachrichtenübertragungsmechanismus übertragen wird, wobei von dem Zielrechner zumindest eine Antwortnachricht an den sendenden Rechner mit den statistischen Informationen übertragen und durch den sendenden Rechner ausgewertet wird, wobei der sendende Rechner der mobile Rechner oder der Netzwerkverbindungsrechner ist.

11. Verfahren nach Anspruch 10,
**dadurch gekennzeichnet, dass**
das zur Kommunikation zwischen dem mobilen Rechner (40) und dem Netzwerkverbindungsrechner (31) zu verwendende Protokoll durch den mobilen Rechner (40) bestimmt wird.

12. Verfahren nach Anspruch 10,
**dadurch gekennzeichnet, dass**
das zur Kommunikation zwischen dem mobilen Rechner (40) und dem Netzwerkverbindungsrechner (31) zu verwendende Protokoll durch den Netzwerkverbindungsrechner (31) bestimmt wird.

13. Verfahren nach einem der Ansprüche 10 bis 12,
**dadurch gekennzeichnet, dass**
als statistische Daten eine oder mehrere der folgenden Informationen herangezogen werden:
- Anzahl von Protokollumsetzungen, insbesondere IP Version Translation,
- Anzahl der Teilstrecken, insbesondere Hops,
- Roundtrip Time,
- Verzögerung, insbesondere Delay,
- Schwankungsbreite, insbesondere Jitter.

14. Verfahren nach einem der Ansprüche 10 bis 13,
**dadurch gekennzeichnet, dass**
von dem sendenden Rechner eine für jedes Protokoll spezifische Anfragenachricht an den Zielrechner gesendet wird.

15. Verfahren nach einem der Ansprüche 10 bis 14,
**dadurch gekennzeichnet, dass**
die statistischen Informationen von jedem in der Übertragungstrecke der Antwortnachricht befindlichen Rechner in einem Header der Antwortnachricht eingefügt werden.

16. Rechner, der an ein Kommunikationssystem anschließbar ist, das folgende Merkmale aufweist:
- zumindest ein erstes Kommunikationsnetzwerk (10-1, 10-2), das zur Kommunikation gemäß einem ersten Protokoll ausgebildet ist,
- zumindest ein zweites Kommunikationsnetzwerk (20), das zur Kommunikation gemäß einem zweiten Protokoll ausgebildet ist,
- zumindest ein drittes Kommunikationsnetzwerk (30-1, 30-2), das zur Kommunikation gemäß dem ersten und dem zweiten Protokoll ausgebildet ist, wobei das zumindest eine erste Kommunikationsnetzwerk (10-1, 10-2) und/oder das zumindest eine zweite Kommunikationsnetzwerk (20) und/oder das zumindest eine dritte Kommunikationsnetzwerk 30-1, 30-2) zum Austausch von Nachrichten miteinander gekoppelt sind,
- einen Zielrechner (42), der zur Kommunikation gemäß dem ersten und/oder dem zweiten Protokoll ausgebildet ist und ein Rechner des ersten oder des zweiten oder des dritten Kommunikationsnetzwerks (10-1, 10-2, 30, 30-1, 30-2) ist,
wobei der Rechner zur Kommunikation gemäß dem ersten und dem zweiten Protokoll ausgebildet ist und ferner derart ausgebildet ist, dass beim Anschluss an einen Netzwerkverbindungsrechner (31) des dritten Kommunikationsnetzwerks (30-1, 30-2) vor dem Aufbau einer Kommunikationsverbindung zu dem Zielrechner ermittelt wird, welches Protokoll für eine Kommunikation mit dem Netzwerkverbindungsrechner (31) verwendet werden soll,
**dadurch gekennzeichnet, dass** die Entscheidung über das zu verwendende Protokoll anhand statistischer Daten über die Netzwerktopologie von dem Rechner zu dem Zielrechner getroffen wird und zur Ermittlung der statistischen Daten von einem sendenden Rechner eine Anfragenachricht an den Zielrechner unter Verwendung eines Hop-by-Hop-Nachrichtenübertragungsmechanismus übertragen wird, wobei von dem Zielrechner zumindest eine Antwortnachricht an den sendenden Rechner mit den statistischen Informationen übertragen und durch den sendenden Rechner ausgewertet wird, wobei der sendende Rechner der Rechner oder der Netzwerkverbindungsrechner ist.

17. Rechner nach Anspruch 16,
**dadurch gekennzeichnet, dass**
dieser zur Durchführung des Verfahrens nach einem der Ansprüche 11 bis 15 ausgebildet ist.

18. Computerprogrammprodukt, das direkt in den internen Speicher eines digitalen Computers geladen werden kann und Softwarecodeabschnitte umfasst, mit denen die Schritte gemäß einem der Ansprüche 10 bis 15 ausgeführt werden, wenn das Produkt auf einem Computer läuft.

19. Computerprogrammprodukt, das auf einem computergeeigneten Medium gespeichert ist, das direkt in den internen Speicher eines digitalen Computers geladen werden kann und Softwarecodeabschnitte umfasst, mit denen die Schritte gemäß einem der Ansprüche 10 bis 15 ausgeführt werden, wenn das Produkt auf einem Computer lauft und folgendes umfasst:
- computerlesbare Programmmittel, die einen Rechner beim Anschluss an ein Kommunikationsnetzwerk (30-1, 30-2), das zur Kommunikation gemäß einem ersten und einem zweiten Protokoll ausgebildet ist, zur Durchführung einer parallelen oder sequentiellen Kommunikation in dem ersten und dem zweiten Protokoll zu einem Zielrechner veranlassen;
- computerlesbare Programmmittel, die den Computer zur Entgegennahme von jeweiligen Antwortnachrichten des Zielrechners auf die in dem ersten und dem zweiten Protokoll übertragenen Anfragenachrichten veranlassen;
- computerlesbare Programmmittel, die den Computer zum Auswerten der gemäß dem ersten und dem zweiten Protokoll empfangenen Nachrichten hinsichtlich der jeweiligen Übertragungsstrecke der Nachrichten veranlassen;
- computerlesbare Programmmittel, die den Computer zum Aufbau einer Kommunikationsstrecke gemäß dem ersten oder dem zweiten Protokoll zu dem Zielrechner für die weitere Kommunikation veranlassen.

## Claims

1. Communication system (100) having
- at least one first communication network (10-1, 10-2) designed for communication according to a first protocol,
- at least one second communication network (20) designed for communication according to a second protocol,
- at least one third communication network (30-1, 30-2) designed for communication according to the first and the second protocol,
- wherein the at least one first communication network (10-1, 10-2) and/or the at least one second communication network (20) and/or the at least one third communication network (30-1, 30-2) are coupled to one another for the exchange of messages,
- a mobile computer (40) designed for communication according to the first and the second protocol,
- a target computer (42) that is designed for communication according to the first and/or second protocol and is a computer of the first or of the second or of the third communication network (10-1, 10-2, 30, 30-1, 30-2),
- wherein the communication system is designed in such a way that when the mobile computer (40) is connected to a network connection computer (31) of the third communication network (30-1, 30-2), the protocol to be used for communication with the network connection computer (31) is determined before the establishment of a communication connection to the target computer (42), **characterised in that**
the decision about the protocol to be used is made on the basis of statistical data about the network topology from the mobile computer (40) to the target computer and to determine the statistical data, a query message is transmitted by a sending computer to the target computer using a hop-by-hop message transmission mechanism, wherein at least one reply message with the statistical information is transmitted by the target computer to the sending computer and is evaluated by the sending computer, wherein the sending computer is either the mobile computer or the network connection computer.

2. Communication system according to claim 1,
**characterised in that**
said system is designed in such a way that the protocol to be used for communication between the mobile computer (40) and the network connection computer (31) is determined by the mobile computer (40).

3. Communication system according to claim 1 or 2,
**characterised in that**
said system is designed in such a way that the protocol to be used for communication between the mobile computer (40) and the network connection computer (31) is determined by the network connection computer (31).

4. Communication system according to one of the preceding claims,
**characterised in that**
one or more of the following types of information can be used as statistical data:
- number of protocol translations, in particular IP version translations,
- number of hops,
- round-trip time,
- delay,
- range of variation, in particular jitter.

5. Communication system according to one of the preceding claims,
**characterised in that**
the statistical information is contained in a header of the reply message.

6. Communication system according to claim 5,
**characterised in that**
said system is designed in such a way that a query message specific to each protocol is sent to the target computer.

7. Communication system according to one of the preceding claims,
**characterised in that**
the first protocol is Internet Protocol Version 4 (IPv4).

8. Communication system according to one of the preceding claims,
**characterised in that**
the second protocol is Internet Protocol Version 6 (IPv6).

9. Communication system according to one of the preceding claims,
**characterised in that**
said system is designed in such a way that, following the determination of the protocol to be used, the mobile computer notifies its home agent of a temporary address assigned to it.

10. Method for determining a communication protocol to be used in a communication system having
- at least one first communication network (10-1, 10-2) designed for communication according to a first protocol,
- at least one second communication network (20) designed for communication according to a second protocol,
- at least one third communication network (30-1, 30-2) designed for communication according to the first and the second protocol,
- wherein the at least one first communication network (10-1, 10-2) and/or the at least one second communication network (20) and/or the at least one third communication network (30-1, 30-2) are coupled to one another for the exchange of messages,
- a mobile computer (40) designed for communication according to the first and the second protocol,
- a target computer (42) that is designed for communication according to the first and/or second protocol and is a computer of the first or of the second or of the third communication network (10-1, 10-2, 30, 30-1, 30-2),
wherein, when the mobile computer (40) is connected to a network connection computer (31) of the third communication network (30-1, 30-2), the protocol to be used for communication with the network connection computer (31) is determined before the establishment of a communication connection to the target computer (42),
**characterised in that**
the decision about the protocol to be used is made on the basis of statistical data about the network topology from the mobile computer (40) to the target computer and to determine the statistical data, a query message is transmitted by a sending computer to the target computer using a hop-by-hop message transmission mechanism, wherein at least one reply message with the statistical information is transmitted by the target computer to the sending computer and is evaluated by the sending computer, the sending computer being either the mobile computer or the network connection computer.

11. Method according to claim 10,
**characterised in that**
the protocol to be used for communication between the mobile computer (40) and the network connection computer (31) is determined by the mobile computer (40).

12. Method according to claim 10,
**characterised in that**
the protocol to be used for communication between the mobile computer (40) and the network connection computer (31) is determined by the network connection computer (31).

13. Method according to one of claims 10 to 12,
**characterised in that**
one or more of the following types of information are used as statistical data:
- number of protocol translations, in particular IP version translations,
- number of hops,
- round-trip time,
- delay,
- range of variation, in particular jitter.

14. Method according to one of claims 10 to 13,
**characterised in that**
a query message specific to each protocol is sent by the sending computer to the target computer.

15. Method according to one of claims 10 or 14,
**characterised in that**
the statistical information is inserted in a header of the reply message by each computer in the transmission path of the reply message.

16. Computer that can be connected to a communication system having the following features:
- at least one first communication network (10-1, 10-2) designed for communication according to a first protocol,
- at least one second communication network (20) designed for communication according to a second protocol,
- at least one third communication network (30-1, 30-2) designed for communication according to the first and the second protocol, wherein the at least one first communication network (10-1, 10-2) and/or the at least one second communication network (20) and/or the at least one third communication network (30-1, 30-2) are coupled to one another for the exchange of messages,
- a target computer (42) that is designed for communication according to the first and/or second protocol and is a computer of the first or of the second or of the third communication network (10-1, 10-2, 30, 30-1, 30-2),
wherein the computer is designed for communication according to the first and the second protocol, and is furthermore designed in such a way that when connected to a network connection computer (31) of the third communication network (30-1, 30-2), the protocol to be used for communication with the network connection computer (31) is determined before the establishment of a communication connection to the target computer,
**characterised in that**
the decision about the protocol to be used is made on the basis of statistical data about the network topology from the computer to the target computer and to determine the statistical data, a query message is transmitted by a sending computer to the target computer using a hop-by-hop message transmission mechanism, wherein at least one reply message with the statistical information is transmitted by the target computer to the sending computer and is evaluated by the sending computer, the sending computer being either the computer or the network connection computer.

17. Computer according to claim 16,
**characterised in that**
said computer is designed for carrying out the method according to one of claims 11 to 15.

18. Computer program product which can be loaded directly into the internal memory of a digital computer and comprises software code sections with which the steps according to one of claims 10 to 15 can be executed when the product runs on a computer.

19. Computer program product which is stored on a computer-compatible medium which can be loaded directly into the internal memory of a digital computer and comprises software code sections, with which the steps according to one of claims 10 to 15 are carried out, if the product runs on a computer and comprises the following:
- computer-readable program means which causes a computer, when connected to a communication network (30-1, 30-2) designed for communication according to a first and a second protocol, to perform a parallel or sequential communication in the first and the second protocol to a target computer;
- computer-readable program means which causes the computer to receive respective reply messages of the target computer to the query messages transmitted in the first and the second protocol;
- computer-readable program means which causes the computer to evaluate the messages received according to the first and the second protocol with regard to the respective transmission path of the messages;
- computer-readable program means which causes the computer to establish a communication path according to the first or the second protocol to the target computer for further communication.

## Revendications

1. Système de communication (100) comportant :
- au moins un premier réseau de communication (10-1, 10-2) qui est conçu pour la communication selon un premier protocole,
- au moins un deuxième réseau de communication (20) qui est conçu pour la communication selon un deuxième protocole,
- au moins un troisième réseau de communication (30-1, 30-2) qui est conçu pour la communication selon le premier et le deuxième protocole,
- l'au moins un premier réseau de communication (10-1, 10-2) et/ou l'au moins un deuxième réseau de communication (20) et/ou l'au moins un troisième réseau de communication (30-1, 30-2) étant couplés entre eux pour échanger des messages,
- un ordinateur mobile (40) qui est conçu pour la communication selon le premier et le deuxième protocole,
- un ordinateur cible (42) qui est conçu pour la communication selon le premier et/ou le deuxième protocole et est un ordinateur du premier ou du deuxième ou du troisième réseau de communications (10-1, 10-2, 30, 30-1, 30-2),
- le système de communication étant réalisé de manière telle que, lors du raccordement de l'ordinateur mobile (40) à un ordinateur de connexion au réseau (31) du troisième réseau de communication (30-1, 30-2), il est déterminé, avant l'établissement d'une liaison de communication vers l'ordinateur cible (42), quel protocole doit être utilisé pour une communication avec l'ordinateur de connexion au réseau (31),
**caractérisé en ce que**
la décision relative au protocole à utiliser est prise à l'aide de données statistiques sur la topologie de réseau de l'ordinateur mobile (40) vers l'ordinateur cible et **en ce que**, pour déterminer les données statistiques, un message de requête est transmis par un ordinateur émetteur à l'ordinateur cible en utilisant un mécanisme de transmission de messages saut par saut, au moins un message de réponse étant transmis de l'ordinateur cible à l'ordinateur émetteur avec les informations statistiques et étant évalué par l'ordinateur émetteur, l'ordinateur émetteur étant l'ordinateur mobile ou l'ordinateur de connexion au réseau.

2. Système de communication selon la revendication 1, **caractérisé en ce que** celui-ci est réalisé de telle manière que le protocole à utiliser pour la communication entre l'ordinateur mobile (40) et l'ordinateur de connexion au réseau (31) est déterminé par l'ordinateur mobile (40).

3. Système de communication selon la revendication 1 ou 2, **caractérisé en ce que** celui-ci est réalisé de telle manière que le protocole à utiliser pour la communication entre l'ordinateur mobile (40) et l'ordinateur de connexion au réseau (31) est déterminé par l'ordinateur de connexion au réseau (31).

4. Système de communication selon l'une des revendications précédentes, **caractérisé en ce qu'**il peut être fait appel, en tant que données statistiques, à une ou plusieurs des informations suivantes :
- nombre de conversions de protocoles, en particulier IP Version Translation,
- nombre de trajets partiels, en particulier de sauts,
- roundtrip time,
- retard, en particulier delay,
- plage de variation, en particulier Jitter.

5. Système de communication selon les revendications précédentes, **caractérisé en ce que** les informations statistiques sont contenues dans un en-tête du message de réponse.

6. Système de communication selon la revendication 5, **caractérisé en ce que** celui-ci est réalisé de telle manière qu'un message de requête spécifique pour chaque protocole est envoyé à l'ordinateur cible.

7. Système de communication selon l'une des revendications précédentes, **caractérisé en ce que** le premier protocole est le protocole internet version 4 (IPv4).

8. Système de communication selon l'une des revendications précédentes, **caractérisé en ce que** le deuxième protocole est le protocole internet version 6 (IPv6).

9. Système de communication selon l'une des revendications précédentes, **caractérisé en ce que** celui-ci est réalisé de telle manière que, après la détermination du protocole à utiliser, l'ordinateur mobile communique à son agent d'attache une adresse temporaire qui lui est affectée.

10. Procédé de détermination d'un protocole de communication à utiliser dans un système de communication comportant :
- au moins un premier réseau de communication (10-1, 10-2) qui est conçu pour la communication selon un premier protocole,
- au moins un deuxième réseau de communication (20) qui est conçu pour la communication selon un deuxième protocole,
- au moins un troisième réseau de communication (30-1, 30-2) qui est conçu pour la communication selon le premier et le deuxième protocole, l'au moins un premier réseau de communication (10-1, 10-2) et/ou l'au moins un deuxième réseau de communication (20) et/ou l'au moins un troisième réseau de communication (30-1, 30-2) étant couplés entre eux pour échanger des messages,
- un ordinateur mobile (40) qui est conçu pour la communication selon le premier et le deuxième protocole,
- un ordinateur cible (42) qui est conçu pour la communication selon le premier et/ou le deuxième protocole et est un ordinateur du premier ou du deuxième ou du troisième réseau de communications (10-1, 10-2, 30, 30-1, 30-2),
étant entendu qu'il est déterminé, lors du raccordement de l'ordinateur mobile (40) à un ordinateur de connexion au réseau (31) du troisième réseau de communication (30-1, 30-2), avant l'établissement d'une liaison de communication vers l'ordinateur cible (42), quel protocole doit être utilisé pour une communication avec l'ordinateur de connexion au réseau (31),
**caractérisé en ce que**
la décision relative au protocole à utiliser est prise à l'aide de données statistiques sur la topologie de réseau de l'ordinateur mobile (40) vers l'ordinateur cible et **en ce que**, pour déterminer les données statistiques, un message de requête est transmis par un ordinateur émetteur à l'ordinateur cible en utilisant un mécanisme de transmission de messages saut par saut, au moins un message de réponse étant transmis de l'ordinateur cible à l'ordinateur émetteur avec les informations statistiques et étant évalué par l'ordinateur émetteur, l'ordinateur émetteur étant l'ordinateur mobile ou l'ordinateur de connexion au réseau.

11. Procédé selon la revendication 10, **caractérisé en ce que** le protocole à utiliser pour la communication entre l'ordinateur mobile (40) et l'ordinateur de connexion au réseau (31) est déterminé par l'ordinateur mobile (40).

12. Procédé selon la revendication 10, **caractérisé en ce que** le protocole à utiliser pour la communication entre l'ordinateur mobile (40) et l'ordinateur de connexion au réseau (31) est déterminé par l'ordinateur de connexion au réseau (31).

13. Procédé selon l'une des revendications 10 à 12, **caractérisé en ce qu'**il peut être fait appel, en tant que données statistiques, à une ou plusieurs des informations suivantes :
- nombre de conversions de protocoles, en particulier IP Version Translation,
- nombre de trajets partiels, en particulier de sauts,
- roundtrip time,
- retard, en particulier delay,
- plage de variation, en particulier Jitter.

14. Procédé selon l'une des revendications 10 à 13, **caractérisé en ce qu'**un message de requête spécifique pour chaque protocole est envoyé à l'ordinateur cible par l'ordinateur émetteur.

15. Procédé selon l'une des revendications 10 à 14, **caractérisé en ce que** les informations statistiques sont insérées dans un en-tête du message de réponse par chaque ordinateur situé sur le trajet de transmission du message de réponse.

16. Ordinateur pouvant être raccordé à un système de communication et présentant les caractéristiques suivantes :
- au moins un premier réseau de communication (10-1, 10-2) qui est conçu pour la communication selon un premier protocole,
- au moins un deuxième réseau de communication (20) qui est conçu pour la communication selon un deuxième protocole,
- au moins un troisième réseau de communication (30-1, 30-2) qui est conçu pour la communication selon le premier et le deuxième protocole, l'au moins un premier réseau de communication (10-1, 10-2) et/ou l'au moins un deuxième réseau de communication (20) et/ou l'au moins un troisième réseau de communication (30-1, 30-2) étant couplés entre eux pour échanger des messages,
- un ordinateur cible (42) qui est conçu pour la communication selon le premier et/ou le deuxième protocole et est un ordinateur du premier ou du deuxième ou du troisième réseau de communications (10-1, 10-2, 30, 30-1, 30-2),
- l'ordinateur étant réalisé pour la communication selon le premier et le deuxième protocole et étant en outre réalisé de manière telle que, lors du raccordement à un ordinateur de connexion au réseau (31) du troisième réseau de communication (30-1, 30-2), il est déterminé, avant l'établissement d'une liaison de communication vers l'ordinateur cible, quel protocole doit être utilisé pour une communication avec l'ordinateur de connexion au réseau (31),
**caractérisé en ce que**
la décision relative au protocole à utiliser est prise à l'aide de données statistiques sur la topologie de réseau de l'ordinateur vers l'ordinateur cible et **en ce que**, pour déterminer les données statistiques, un message de requête est transmis par un ordinateur émetteur à l'ordinateur cible en utilisant un mécanisme de transmission de messages saut par saut, au moins un message de réponse étant transmis de l'ordinateur cible à l'ordinateur émetteur avec les informations statistiques et étant évalué par l'ordinateur émetteur, l'ordinateur émetteur étant l'ordinateur ou l'ordinateur de connexion au réseau.

17. Ordinateur selon la revendication 16, **caractérisé en ce que** celui-ci est conçu pour exécuter le procédé selon l'une des revendications 11 à 15.

18. Produit de programme informatique qui peut être chargé directement dans la mémoire interne d'un ordinateur numérique et qui comporte des segments de code logiciel permettant d'exécuter les étapes selon l'une des revendications 10 à 15 lorsque le produit tourne sur un ordinateur.

19. Produit de programme informatique qui est stocké sur un support convenant pour un ordinateur, qui peut être chargé directement dans la mémoire interne d'un ordinateur numérique et qui comporte des segments de code logiciel permettant d'exécuter les étapes selon l'une des revendications 10 à 15 lorsque le produit tourne sur un ordinateur, et qui comprend :
- des moyens de programme lisibles par ordinateur qui font en sorte qu'un ordinateur, lors du raccordement à un réseau de communication (30-1, 30-2) conçu pour la communication selon un premier et un deuxième protocole, réalise une communication parallèle ou séquentielle dans le premier et le deuxième protocole vers un ordinateur cible ;
- des moyens de programme lisibles par ordinateur qui font en sorte que l'ordinateur reçoit des messages de réponse respectifs de l'ordinateur cible en réponse aux messages de requête transmis dans le premier et le deuxième protocole ;
- des moyens de programme lisibles par ordinateur qui font en sorte que l'ordinateur évalue les messages reçus selon le premier et le deuxième protocole quant au trajet de transmission respectif des messages ;
- des moyens de programme lisibles par ordinateur qui font en sorte que l'ordinateur établit un trajet de communication selon le premier ou le deuxième protocole vers l'ordinateur cible pour la suite de la communication.
